# EUROPEAN PATENT SPECIFICATION

(11) **EP 2 886 497 B1**
(45) Date of publication and mention of the grant of the patent: **17.08.2016**
(21) Application number: 14199395.6
(22) Date of filing: 19.12.2014
(51) Int. Cl.: B65G 69/00

(54) **Apparatus and system for restraining a vehicle at a loading dock**
Vorrichtung und System zum Zurückhalten eines Fahrzeugs an einer Laderampe
Appareil et système pour retenir un véhicule à un quai de chargement

(30) Priority: 19.12.2013 SE 1351535
(43) Date of publication of application: 24.06.2015
(73) Proprietor: Assa Abloy Entrance Systems AB, 261 22 Landskrona (SE)
(72) Inventor: Cederqvist, Christer, 564 32 Bankeryd (SE); Karlsson, Petter, 561 42 Huskvarna (SE)
(74) Representative: Zacco Sweden AB

(56) References cited:
- EP-A1- 2 390 207
- GB-A- 2 438 612
- US-A- 3 584 835
- US-A1- 2005 177 984
- US-A1- 2010 322 737

## Description

### TECHNICAL FIELD

The present invention relates to an apparatus and a system for restraining and controlling the restraining of a vehicle at a loading dock, according to the preamble of claims 1 and 12 respectively.

### BACKGROUND ART

There is a need for restraining a vehicle at a loading dock/bay during loading and unloading of the vehicle. This restraining is required during icy and snowy conditions for reducing the risk of having the vehicle slipping away during loading/unloading, and, in general, also required for securing the vehicle so that it is not disconnected from the loading dock by mistake during loading and unloading of the vehicle.

There are a lot of known vehicle restraints used for the above purpose. One example of a vehicle restraint is disclosed in GB 2 438 612 A. This disclosure reveals a tensioning device, such as a ratchet buckle, applying tension to a tension element, such as a strap or a chain, by means of a handle when the tensioning device and the tensioning element are connected between an anchorage on the vehicle and an anchorage at the loading bay for restraining the vehicle at a loading bay.

Document US 2005 177984 A, which is to be considered as closest prior art, discloses a tensile gauge comprising a spring provided between a strap fastener and a second strap.

In the prior art vehicle restraints, there is a problem of restraining the vehicle in a secure manual way as the whole tensioning device may be swung back and forth following the movement of the handle during tensioning implying a risk of injuries for an operator before the slack of the tensioning hanging in principle loose is eliminated. Another problem when using prior art vehicle restraints is that the release of the tensioning when the vehicle is to be disengaged from the loading bay may cause the whole tensioning device to backlash in a hazardous way. Yet another problem is that the straps and chains are difficult and cumbersome to tighten up and their loose ends are tedious to keep track of prior to restraining the vehicle to the loading bay and after releasing the vehicle from the loading bay. Still another problem is that there are many steps of preparation and manual handling before the prior art tensioning device is ready for use, among others due to the "elusive" ties.

### SUMMARY OF THE INVENTION

It is an object of the invention to provide an apparatus and system for restraining vehicles as at loading dock, which solve, or at least lessen, the problems mentioned above.

It is an object of the invention to provide an easy and secure use of an apparatus and system when restraining a vehicle at a loading dock by eliminating any clutter with loose ties and loose ends of said ties simplifying the use of only one person to both restrain, release and, after disengaging a current vehicle, prepare the vehicle restraint for the next vehicle to be restrained.

Another object of the invention is to provide a vehicle restraint that provides both an ergonomically sound way of working and an ergonomically sound working posture.

Yet another object of the invention is to provide a vehicle restraint that reduces the number of steps used when operating it but especially when making it ready for use.

Still another object of the invention is to provide a vehicle restraint that simplifies the operation of it but makes it especially easy to connect and restrain the vehicle as there is no loose ties or tie ends as there is a self-winding function integrated in the inventive restraining apparatus, whereby the ties and tie ends are also easy to handle and grip making the inventive restraint quickly and easily ready for use by ease of the handling of the automatically pulled in end of the vehicle restraint, which end also is easily pulled out and coupled to the vehicle for restraining it.

A further object of the invention is to provide a secure and easy vehicle restraining that reduces the risk of injuries as the restraining apparatus is hindered in movement vertically but not sideways/laterally, while, at the same time, enables a controlled but yet flexible and adaptable lateral movement for the vehicle such that the vehicle is flexibly connected against the loading dock but restrained with a predetermined preload/force.

It is another object of the invention to provide a solid and robust vehicle restraining by using a predetermined and controlled way of preloading the tensioning when restraining the vehicle by use of a preload unit enabling a secure and intuitive handling during restraining.

These objects are achieved by means of an apparatus for restraining vehicles as claimed in the associated independent apparatus claim 1, preferred variants thereof being defined in the associated dependent claims.

These objects are also achieved by a system for control of the restraining of vehicles as claimed in the independent system claim 12, preferred variants of the system being defined in its associated dependent claims.

The apparatus for restraining vehicles at a loading dock according to the independent apparatus claim comprises a control arrangement operatively connected to a locking device comprising a retractable coupling adapted to be releasable connected to the vehicle for restraining the vehicle, and which control arrangement is adapted to control tensioning and release of the tension of the restraining of the vehicle; a preloading unit being attached at one end to the locking device and attached at the other end to the loading dock, which preloading unit is adapted to preload the restraint of the vehicle by means of a suspension being compressed when restraining the vehicle, wherein the locking device comprises a spool onto which the retractable coupling is windable; a blocking mechanism operatively connected to the control arrangement and the spool; and a spiral spring biasing the spool for preloading and retracting the retractable coupling.

The apparatus for restraining a vehicle at a loading dock according to the invention may alternatively comprise a control lever rotatably attached to a locking device comprising a retractable coupling adapted to be releasable connected to the vehicle for restraining the vehicle, and which control lever is adapted to control tensioning and release of the tension of the restraining of the vehicle; a preloading unit being attached at one end to the locking device and attached at the other end to the loading dock, which preloading unit is adapted to preload the restraint of the vehicle by means of a suspension being compressed when restraining the vehicle, wherein the locking device comprises a spool onto which the retractable coupling is windable; a ratchet and pawl mechanism operatively connected to the control lever and the spool; and a spiral spring biasing the spool for preloading and retracting the retractable coupling, and the locking device being slidably supported against the loading dock to enable horizontal movements of the locking device in response to vehicle movements.

In some embodiments of the above invention, the locking device is supported by the loading dock to enable horizontal movements of the locking device in response to vehicle movements. In an embodiment of the above invention, the locking device is arranged on a bracket being firmly attached to the loading dock, whereby the locking device is slidably supported against a sliding surface on the bracket. In one embodiment of the above invention, the preloading unit is arranged on a bracket being firmly attached to the loading dock, whereby the preloading unit is articulately attached at its other end to the bracket. In another embodiment of the above invention, the locking device and the preloading unit are arranged on a common bracket forming a unit. In yet another embodiment of the above invention, the spool, onto which the retractable coupling is windable, is preloaded by the spiral spring, which preload gives a biasing that is possible to counteract when manually pulling out the retractable coupling from the locking device for connection to the vehicle. This eliminates any slack of the retractable coupling. The above embodiments may be combined in any pairs or be a triple combination of any of the embodiments or even be a tetra combination of any of the embodiments or a combination of all five embodiments.

In some other embodiments of the above invention, the blocking mechanism is a ratchet and pawl mechanism of the locking device comprising a ratchet fixedly connected to the spool, a carrier pawl, a stationary pawl and the control arrangement in the form of a control lever, which control lever is rotatably attached to the ratchet and provided with the carrier pawl, and the stationary pawl is pivotally attached to a stationary housing of the locking device. In another embodiment of the above invention, the carrier pawl is pivotally attached to the control lever and the control lever is provided with a protrusion being adapted to disengage the stationary pawl from the ratchet for releasing the tension of the restraining of the vehicle. In yet another embodiment of the above invention, the housing of the locking device is provided with a protrusion being adapted to disengage the carrier pawl from the ratchet for releasing the tension of the restraining of the vehicle. In still another embodiment of the above invention, the disengagement of the stationary pawl from the ratchet, and the disengagement of the carrier pawl from the ratchet are adapted to occur simultaneously for releasing the tension of the restraining of the vehicle. In a further embodiment, the carrier pawl is attached to the control lever and the protrusion of the control lever is provided on the control lever such that the stationary pawl is disengaged from the ratchet by the protrusion of the control lever simultaneously as the carrier pawl is disengaged from the ratchet by the protrusion of the locking device for releasing the tension of the restraining of the vehicle. The above embodiments may be combined in any pairs or even be a triple or tetra combination of any of the embodiments or even be a combination of five, six, seven, eight of any of the above embodiments, or be a combination of all embodiments above.

In another embodiment of the invention, the apparatus comprises the ratchet and pawl mechanism of the locking device, which in turn comprises a ratchet fixedly connected to the spool, a carrier pawl, a stationary pawl and the control lever, which control lever is rotatably attached to the ratchet and provided with the carrier pawl, and the stationary pawl is pivotally attached to a stationary housing of the locking device. This embodiment may also be combined with any of the other embodiments, singularly, or in any pairs or in a triple or tetra combination of any of the embodiments or even be a combination of five, six, seven, eight or nine of any of the above embodiments, or be a combination of all embodiments above.

The invention also concerns a system for control of the restraining of vehicles at a loading dock according to the independent system claim, comprising the apparatus according to any of the claims, and at least one sensor adapted to alarm or at least indicate when the vehicle moves away from the locking device and thereby generates a force in the retractable coupling exceeding an overload threshold value during and after restraining of the vehicle.

In some embodiments of the above invention, the system comprises a sensor adapted to alarm or at least indicate if the vehicle moves towards the locking device and thereby decreases a force in the retractable coupling below a slack threshold value or if the preloading unit has a preload lower than a slack threshold value during and after restraining of the vehicle. In one embodiment of the above invention, the system comprises at least one sensor adapted to alarm or at least indicate when the preloading unit has reached a predetermined preload during restraining of the vehicle. In another embodiment of the above invention, the system comprises at least one sensor adapted to alarm or at least indicate that the locking system is disarmed and furled and ready for restraining of the vehicle.

To sum up, the apparatus and system for restraining vehicles to loading docks according to the invention reduces the risk of injuries for operators. By providing the apparatus and system for restraining vehicles to loading docks according to the invention also the number of steps and man-hours required for installment of the restraining apparatus are reduced as it is assembled onto a bracket, which bracket in turn is simplifies the work by reducing the effort of handling and fastening the restraining apparatus securely against the loading dock. Another advantage by this inventive combination of a restraining apparatus and its associated parts being assembled onto a bracket is that this combo forms a common unit that then is easily fixed to the loading dock. Moreover, the restraining apparatus and its associated parts being assembled onto a bracket are easy to prefabricate and preassemble and prestore, and then easily transported as one package to any loading dock, and may then, at the site, be easily to placed in position and the restraining apparatus also does not have to be adjusted in relative position to the sliding surface, as this surface is already part of the bracket, i.e. indirectly part of the restraining apparatus.

Furthermore, the inventive system contributes to the vehicle restraining by making it more secure as any of the sensors may indicate, to the driver of the vehicle and/or the operator of the vehicle restraint, any change of status regarding the restraining that may negatively and dangerously affect the use of the vehicle restraint for eliminating or at least greatly reduce any risks of damages on goods or persons. An advantage is that the driver of the vehicle may be reminded of the restraint by a warning or alarm function if he/she forgets to check if the vehicle is disengaged or not before driving away from the loading dock.

Moreover, the apparatus and system for restraint of vehicles according to some embodiments are simple and fast to use. By providing the apparatus and system for restraint of vehicles to loading docks according to some embodiments, the restraining is quickly performed and the restraining apparatus is easily prepared to be ready for use. The apparatus and system for restraint of vehicles to docks according to some embodiments eliminate any clutter with loose ties and their ends making it neat and tidy for a user. The apparatus and system for restrain of vehicles to loading bays according to some embodiments are simple requiring few manual operations compared to prior art. The apparatus and system for restrain of a vehicle to loading docks according to some embodiments are intuitive and therefore easy to understand in regard of operation. The apparatus and system for restraining vehicles to loading docks according to some embodiments are made in a robust construction and easy installed. The apparatus and system for restraining vehicles to loading docks according to some embodiments are easy to use as the retractable coupling that may be a strap or band is automatically rolled in when not in use by the biasing spiral spring. The apparatus and system for restraining vehicles to loading docks according to some embodiments are quickly coupled or hooked onto the vehicle by only pulling the retractable coupling until it reaches the point of attachment without cranking by means of the control lever. The apparatus and system for restraining vehicles to loading docks according to some embodiments are easy to use as the retractable coupling band is spanned by only a few strokes of the control lever. The apparatus and system for restraining vehicles to loading docks according to some embodiments are easy to use as the retractable coupling band is loosened by moving the control lever to the release position. The apparatus and system for restraining vehicles to loading docks according to some embodiments are easy to use as the retractable coupling band when unhooked from the vehicle is automatically rolled into a coil only revealing an easily gripped band end thereafter.

### BRIEF DESCRIPTION OF THE DRAWINGS

The apparatus and system for restraining vehicles at loading docks will now be described in more detail with reference to the drawings enclosed, in which examples of presently preferred embodiments of the invention are shown.
Fig. 1 is a view of an exemplary restraining apparatus and system according to the invention before use,
Fig. 2 is a sectional view of the restraining apparatus and system along their length in Fig. 1,
Fig. 3 is a sectional view of a coupling device of the restraining apparatus and system in Figs. 1 and 2 with a retractable coupling pulled in after and before use,
Fig. 4 is a perspective view of the restraining apparatus and system in Figs. 1 and 2 but from another angle and with a housing of the coupling device and a preload unit being transparent,
Fig. 5 is a sectional perspective view of the coupling device of Fig. 3 in a tension releasing state with the left wall of the housing removed for revealing a ratchet and pawl mechanism operatively coupled to a winded-up strap that is released in this state,
Fig. 6 is a sectional perspective view of the coupling device of Figs. 3 and 5 in the same tension releasing state as in fig. 3 with the left wall of the housing removed for revealing the ratchet and pawl mechanism and the strap in its released state,
Fig. 7 is a sectional perspective view of the coupling device of Figs. 3, 5 and 6 in the same releasing state with the left wall of the housing removed and the strap in its released state,
Fig. 8 is sectional perspective view of the coupling device of Figs. 3, and 5 to 7 with a horizontal cut through an rotary axle showing the connection of the parts being rotatable and fixed in relation to each other in the coupling device, and
Fig. 9 schematically shows the restraining system according to the invention with at least one sensor for control of the restraining of the vehicle against a loading dock by means of the restraining apparatus disclosed in Figs. 1 to 8 according to the invention.

### DETAILED DESCRIPTION

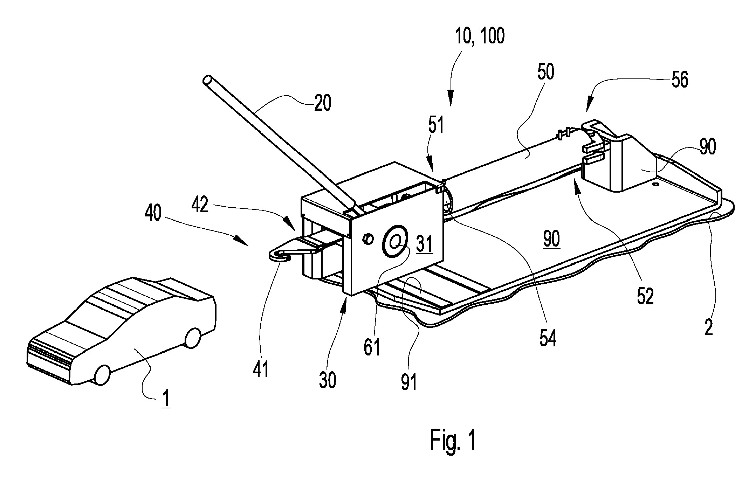

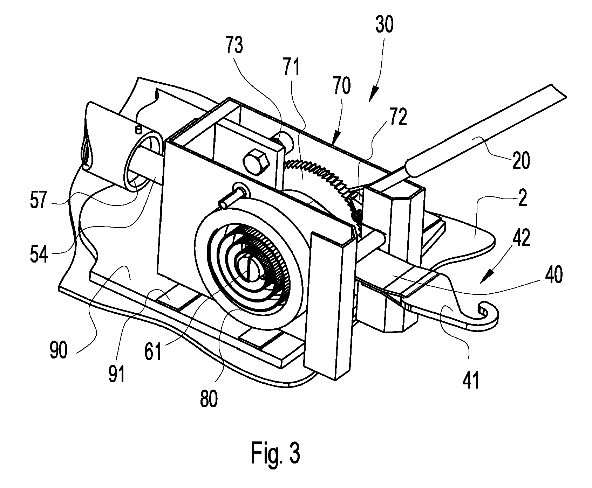

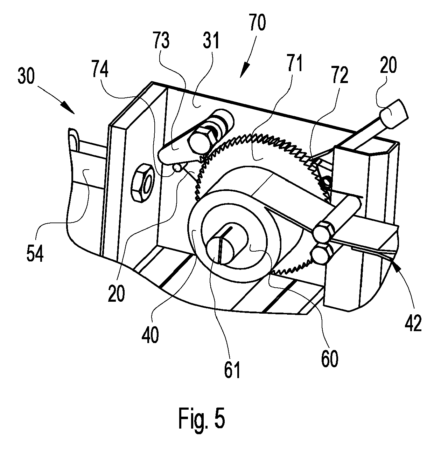

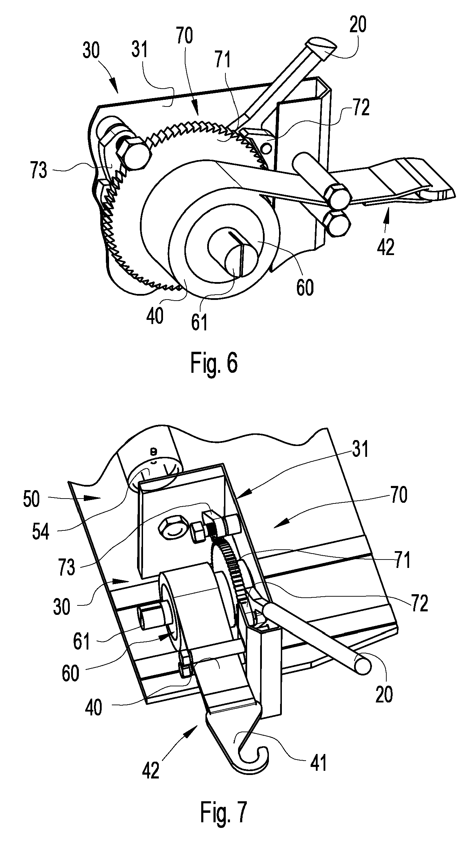

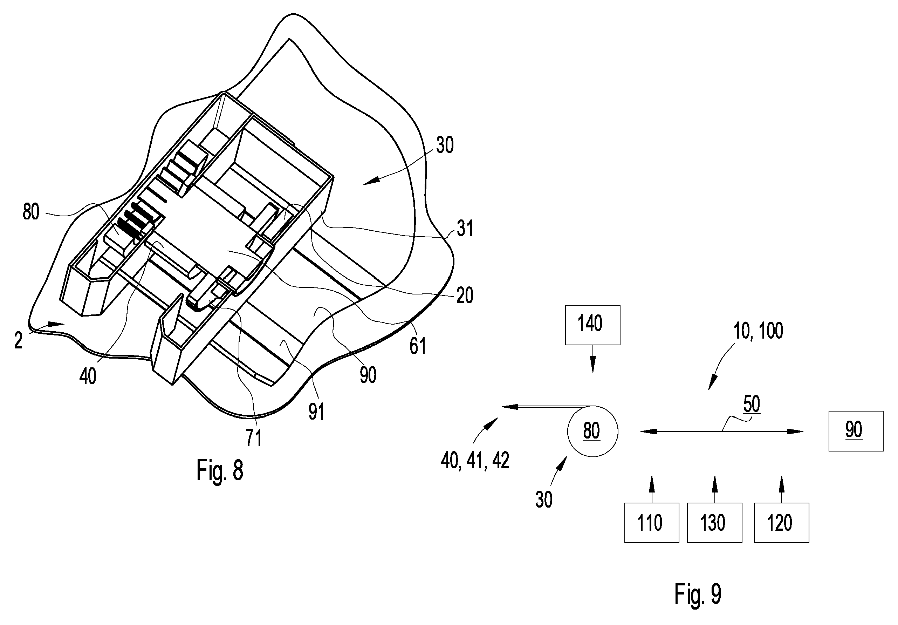

Figs. 1 to 9 disclose a restraining apparatus 10 and system 100 according to the invention. The system 100 is used for control of the restraining of a vehicle 1 at a loading dock 2 by means of the restraining apparatus 10.

The restraining apparatus 10 above for restraining vehicles at loading docks comprises a control arrangement 20 for operating a locking device 30. The locking device 30 comprises a retractable coupling 40 that is releasable connected to the vehicle when to be restrained. The control arrangement 20 is used for controlling tensioning and release of the tension in the vehicle restraint.

The control arrangement 20 may be a motor arrangement enabling an automatic retracting of the retractable coupling 40 into the locking device 30 when not in use. Such a motor arrangement would also make it possible to tighten any occurring slack of the retractable coupling 40 if a slack threshold value is reached after restraining the vehicle 1. Another application of a control arrangement may be a manually operated control lever 20. The control lever 20 may be rotatably attached to the locking device 30. Moreover, a combination of a motor and a manual control lever is possible. The motor would have the ability of automatically retracting the retractable coupling 40 for restraining the vehicle and/or be able to tighten any occurring slack of the retractable coupling. At the same time, the manual control lever 20 could be used as a safety device if power is lost and/or be used as a manual releaser of the tension in the retractable coupling 40 when the vehicle is to be disengaged from the loading dock. This latter manual release function is explained further below.

A preloading unit 50 is also comprised in the apparatus 10 above. This preloading unit 50 is attached at one end 51 to the locking device 30. The preloading unit 50 is attached at its other end 52 to the loading dock 2. The purpose of the preloading unit 50 is to preload the restraint of the vehicle 1 by means of a suspension 53 being compressed when restraining the vehicle.

The locking device 30 of the restraining apparatus 10 comprises a spool 60 onto which the retractable coupling 40 is windable, so that it may be coiled up onto the spool when not in use and unwinded when the vehicle 1 is to be restrained. The locking device 30 also comprises a back stop or blocking device 70 used for hindering any back lashing and any undesired reverse movement of rotating parts of the locking device 30 during and after restraining the vehicle 1. One possible application of the back stop or blocking device may be a ratchet and pawl mechanism 70, 71, 72, 73, 74, 75 operatively connected to the control arrangement/lever 20 and the rotatable spool 60. The locking device 30 further comprises a spiral spring 80 rotatively biasing the spool 60 for preloading and retracting the retractable coupling 40 when it is to be pulled into the locking device 30. The locking device 30 is movable in at least one degree of freedom, i.e. sideways/laterally, pivotably and linearly in substantially the horizontal plane in relation to the vehicle 1 and the loading dock 2, by being slidably supported against the loading dock 2. This enables horizontal movements of the locking device 30 in response to vehicle movements for achieving a flexible and not too rigid coupling therebetween.

Moreover, the locking device 30 of the restraining apparatus 10 is arranged on a bracket 90. The bracket 90 is adapted to be firmly attached to the loading dock 2, e.g. by fastening means in the form of screws. The locking device 30 is slidably supported against a sliding surface 91 on the bracket. The preloading unit 50 may also be arranged on the bracket 90. The preloading unit 50 is articulately attached at its other end 52 to the bracket. This articulated attachment of the preloading unit 50 at its other end 52 to the bracket 90 is accomplished by means of a rotating or pivot joint 56 shown in Figs. 1, 2, and 4. Furthermore, the locking device 30 and the preloading unit 50 are adapted for arrangement on the bracket 90 forming a unit by means of the bracket 90 forming a common platform, which in turn is attached to the loading dock 2.

Functionally, the spool 60, onto which the retractable coupling 40 is windable, is preloaded by the spiral spring 80. This enables the retractable coupling to be retracted and held in its retracted state when not in use. The biasing of spiral spring 80 generates a preload, but, which preload is possible to counteract when manually pulling out the retractable coupling 40 from the locking device 30 when connecting it to the vehicle. This constant biasing back into the locking device for the retractable coupling 40 eliminates any slack of the retractable coupling.

Inventively, the ratchet and pawl mechanism 70 of the locking device 30 comprises a ratchet 71, a carrier pawl 72, a stationary pawl 73 and the control lever 20. The control lever 20 is rotatably attached to the ratchet 71 and provided with the carrier pawl 72. The stationary pawl 73 is in turn pivotally attached to a stationary housing 31 of the locking device 30. The carrier pawl 72 of the control lever 20 is pivotally attached to the control lever. The control lever 20 is provided with a protrusion or pin 74 that is adapted to disengage the stationary pawl or blocking heel 73 of the stationary housing 31 from the ratchet 71 for releasing the tension of the restraining of the vehicle 1. The same or complementary function is achieved by means of a protrusion or pin 75 attached to the housing 31 of the locking device 30. The protrusion or pin 75 is adapted to disengage the carrier pawl 72 from the ratchet 71 for releasing the tension of the restraining of the vehicle 1. The disengagement of the stationary pawl 73 of the stationary housing 31 from the ratchet 71, and the disengagement of the carrier pawl 72 of the control lever 2 from the ratchet 71 are adapted to occur simultaneously for releasing the tension of the restraining of the vehicle 1. The carrier pawl 72 and the protrusion 74 of the control lever are arranged on the control lever 20 in relation to the location of the protrusion 75 of the locking device and the location of the stationary pawl 73. The carrier pawl 72 and the protrusion 74 of the control lever are arranged on the control lever 20 in relation to the location of the protrusion 75 of the locking device and the location of the stationary pawl 73 on the stationary housing 31, such that the disengagement of the carrier pawl 72 of the control lever from the ratchet 71 occurs simultaneous as the disengagement of the stationary pawl 73 of the stationary housing from the ratchet 71.

In other words, the locking device 30 of the invention may be defined as a roller belt or band (the biased spool 60 and the retractable band-like coupling 40) with the hook 41. When a vehicle 1, i.e. a truck or lorry is parked against a loading dock 2, the band 40 is rolled out and the hook 41 is fastened to the vehicle, for example to the ICC bar of the vehicle. The band 40 is then tightened or preloaded by rolling it up on the spool 60 by the ratchet and pawl mechanism 70 with the control lever 20. The spool 60 and the ratchet and pawl mechanism 70 are connected on the bracket 90 to a spring device in the form of the preload unit 50. This preload unit 50 gives the vehicle some possibility to move without being dislocated, and to maintain tension to the band/belt 40. The spool 60 and the ratchet and pawl mechanism 70 are so attached to the bracket 90 that they may slide sideways while pivoting around the rotating joint 56 to be more adaptable to the movements of the vehicle.

According to the invention, there are at least two separate preloads or biasing functions used in the restraining apparatus 10.

One preload or biasing is achieved by the spiral spring 80 that "motorizes" the retracting or pulling in of the retractable coupling 40 in the form of a band with a hook 41 at its free end 42 when not in use. The retractable coupling 40 is securely fastened at its inner end (not shown) to the spool 60. The retractable coupling 40 is adapted to be rolled up/in on the spool 60 in the form of a roller being rotatatively biased/winded-up a certain number of revolutions by the spiral spring 80. This enables an automatic winding-in of the hook 41 and the free end 42 of the retractable coupling 40 for eliminating any loose ends that is cumbersome to handle and any risk of tripping over it. In regard of the preload or biasing of the retractable coupling 40, this may be achieved in the following way by for example use of a spool/roller shaft or axle 61 diameter of 60 mm. This axle 61 is an attachment for at least the spiral spring 80, the spool 60, the ratchet 71, and the control lever 20. The axle 61 is rotatably arranged in the housing 31 of the locking device 30. Here, if a 10 revolutions spiral or motor spring 80 is used, this allows for a band length of maximum 3 m (about 20 revolutions are then available for winding up the spiral spring 80 and winding in the retractable coupling 40) and the spool diameter onto which the band/strap of the retractable coupling 40 is coiled up may then be between 60 -110 mm.

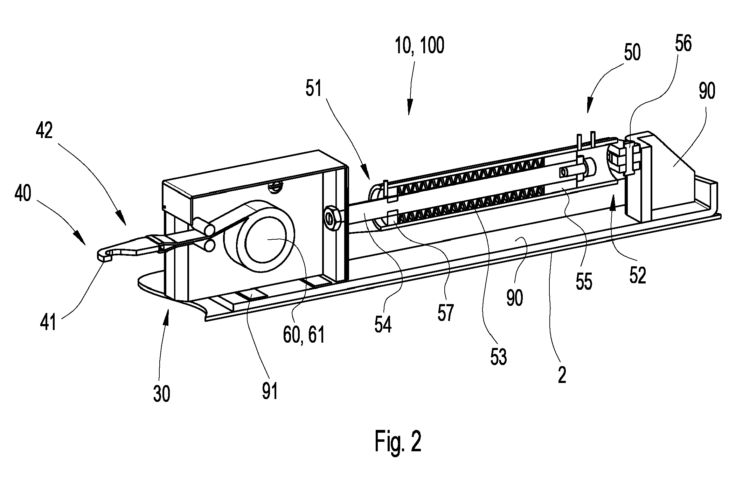

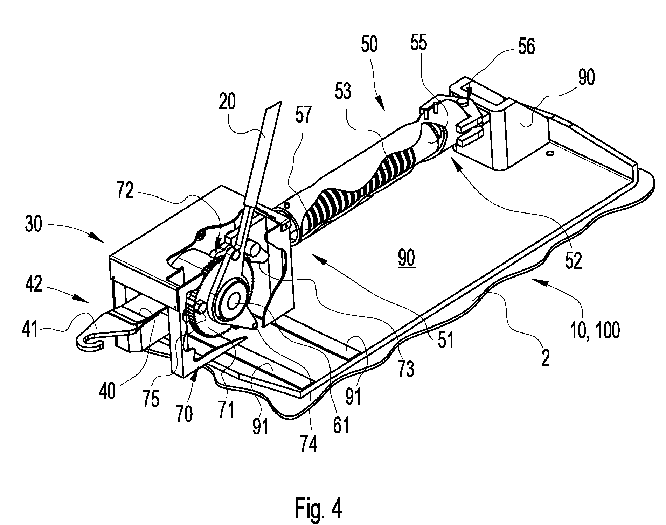

The other preload or biasing of the restraining apparatus 10 according to the invention is achieved by the preload unit 50 that may be achieved with a preload in the following way: A force of 300 N pulling on the control lever gives between 5.5 -10 kN in tension force. Hence, a preload of 5.25 kN may be achieved by using 66 pieces of disc springs 53 stapled along a length of the cylinder-like housing of the preload unit 50 in its axial direction (see Figs. 2 and 4). The disc springs 53 may be of the type SF-TAF 50/25.4 x 2.25 for corresponding to a preload length of 49.5 mm. Allowed suspension in this system is +/- 49.5 mm at 5.25 kN preload, while a maximum compressed suspension may give a preload of 9 kN. The locking device 30 is connected to the preload unit 50 at its end 51 by means of a first end of an elongated shaft or axle 54.

The shaft 54 is attached with a second axle end to a piston-like cylinder 55 in the preload unit 50 closer to its second end 52. The shaft 54 works in the similar way as a drawbar on a vehicle 1 or a tie rod being pulled when restraining the vehicle and acts as a piston rod on the piston cylinder 55 compressing the disc springs 53 a certain distance in direction towards the locking device 30 and the vehicle until a predetermined desired preload and a desired tension of the vehicle restraint is achieved. The preload unit 50 comprises a preload anvil 57 at its end 51 for holding the disc springs 53 in place and making the preload unit a sealed unit.

This restraining of the vehicle 1 is done by cranking the control lever 20 in known way back and forth, whereby the locking device 30 moves by sliding on the sliding surface 91 of the bracket 90 towards the vehicle 1 until the desired tension of the vehicle restraint is achieved and the cranking is stopped. In this tensioned state, the lever may be left in the position shown in Fig. 4 during loading/unloading of the vehicle. Then, when the vehicle is to be disengaged from the loading dock 2, the tension of the restraint is released by rotating the free end of the control lever 20 towards the vehicle until an end position shown in Figs. 1, 3, 5, 6, and 7 for releasing the tension. This tension release is performed by pushing the control lever 20 distinctly a short distance towards the vehicle in this forward position, whereby the carrier pawl 72 is pressed with one end against the pin 75 of the locking device housing 31 for lifting the other end of carrier pawl 72 out of engagement with the ratchet 71 (the pivot of the carrier pawl 72 is arranged between its ends), while, at substantially same time or simultaneously, the pin 74 on the control lever 20 lifts the engaging end of the stationary pawl 73 or blocking heel out of engagement with the ratchet 71, whereby the ratchet 71 is released and rotates forwards towards the vehicle 1 releasing the tension in the retractable coupling 40. Then, the hook 41 is easily hooked off the vehicle and the free end 42 of the retractable coupling 40 pulled in by means of the spiral spring 80.

The preload unit 50 is rotatable or pivotally attached at its second end 52 to the bracket 90 by means of the rotating joint 56 shown in Figs. 1, 2, and 4. This rotating joint 56 has a rotary axis extending substantially vertically or vertically for enabling rotation or pivoting of the preload unit 50 and the locking device 30 in substantially the horizontal plane, so that the locking device may slide laterally on the sliding surface 91 of the bracket 90 to the left or right in Figs. 1, 2, 4 and 4 besides the freedom of sliding movement towards and away from the vehicle 1 during restraining and at release of the restraining. Hence, the rotating joint 56 eliminates or at least reduces movement of the preload unit 50 and the locking device 30 in the vertical direction, i.e. perpendicularly in relation to the sliding surface 91 of the bracket 90. This eliminates the risk of injury caused by crushing (squeezing) between the underside of the locking device 30 and the bracket 90. Hence, the locking device 30 is in principle telescopically or piston-like connected to the preload unit 50 as the shaft 54 connecting them movably together slides in and out of the preload unit 50 similar to a telescope or piston.

Moreover, both the locking device 30 and the preload unit 50 or spring device may be equipped with sensors for making up the system 100 according to the invention. The preload unit 50 or spring device may be equipped with one, two, three or more sensors. The locking device 30 may be equipped with at least one sensor or more sensors. The sensors, individually or in any combination, would then give at least one signal if the preload is lost; when the restraining apparatus 10 is sufficient preloaded; when the restraining apparatus 10 is disarmed, not in restraining tension, and furled; or if the driver of the vehicle 1 tries to drive away without disconnecting the retractable coupling 40 in the form of the belt or band from the loading dock 2.

Hence, the system 100 for controlling the restraining of the vehicle 1 at a loading dock 2 comprises the restraining apparatus 10 above, and at least one sensor 110, 120, 130, 140. The sensor 110 of the restraining control system 100 is to at least indicate or even alarm when the vehicle moves away from the locking device 30, i.e. the loading dock, while generating a force in the retractable band coupling 40 that exceeds an overload threshold value during and after restraining of the vehicle. Moreover, the restraining control system 100 may comprise a second sensor 120, either in combination with the first sensor 110 or singularly. The second sensor 120 is adapted to at least indicate or alarm if the vehicle 1 moves towards the locking device 30, i.e. the loading dock 2, and decreases a force in the retractable band coupling 40 below a slack threshold value or until the preloading unit 50 has a preload lower than a slack threshold value during and after restraining of the vehicle. Furthermore, the restraining control system 100 may comprise a third sensor 130, either in any combination with the first sensor 110, and/or the second sensor 120 or singularly. This third sensor 130 is adapted to at least indicate or alarm when the preloading unit 50 has reached a predetermined preload during restraining of the vehicle 1. As a further complement, the restraining control system 100 may comprise a fourth sensor 140, either in any combination with the first sensor 110, and/or the second sensor 120 and/or the third sensor or singularly. This fourth sensor 140 is adapted to at least indicate or alarm that the locking system 30 is disarmed and furled and ready for restraining of the vehicle 1.

The sensors 110, 120, 130, 140 may be arranged in different numbers and/or on different positions or be arranged on essentially the same positions or adjacent or close to each other on the restraining apparatus 10, e.g. the locking device 30 and/or the preload unit 50. However, the breaking sensor 110 may be operatively connected to the preload unit 50, e.g. at or adjacent the first end 51 of the preload unit 50. The slack sensor 120 may be operatively connected to the preload unit 50, e.g. at or adjacent the second end 52 of the preload unit 50. The preload sensor 130 may be operatively connected to the preload unit 50, e.g. at or adjacent the middle or centre portion of the preload unit 50. The retracting sensor 140 may be operatively connected to the locking device 30, e.g. at or adjacent the spool 60 and the spiral spring 80.

## Claims

1. Apparatus (10) for restraining a vehicle (1) at a loading dock (2), comprising
- a control arrangement (20) operatively connected to a locking device (30) comprising a retractable coupling (40) adapted to be releasable connected to the vehicle for restraining the vehicle, and which control arrangement (20) is adapted to control tensioning and release of the tension of the restraining of the vehicle (1),
- a preloading unit (50) being attached at one end (51) to the locking device (30) and attached at the other end (52) to the loading dock (2), which preloading unit is adapted to preload the restraint of the vehicle (1) by means of a suspension (53) being compressed when restraining the vehicle, wherein
- the locking device (30) comprises a spool (60) onto which the retractable coupling (40) is windable; a blocking mechanism (70) operatively connected to the control arrangement (20) and the spool (60);
**characterised in that** the locking device (30) comprises a spiral spring (80) biasing the spool (60) for preloading and retracting the retractable coupling (40), wherein the spool (60) is preloaded by the spiral spring (80), such that the retractable coupling (40) is retracted and held in its retracted state when not in use.

2. Apparatus (10) according to claim 1, wherein the locking device (30) is supported by the loading dock (2) to enable horizontal movements of the locking device in response to vehicle movements.

3. Apparatus (10) according to claim 1 or 2, wherein the locking device (30) is arranged on a bracket (90) being firmly attached to the loading dock (2), whereby the locking device (30) is slidably supported against a sliding surface (91) on the bracket.

4. Apparatus (10) according to claim 1, 2 or 3, wherein the preloading unit (50) is arranged on a bracket (90) being firmly attached to the loading dock (2), whereby the preloading unit (50) is articulately attached at its other end (52) to the bracket.

5. Apparatus (10) according to any preceding claim, wherein the locking device (30) and the preloading unit (50) are arranged on a common bracket (90) forming a unit.

6. Apparatus (10) according to any preceding claim, wherein the spool (60), onto which the retractable coupling (40) is windable, is preloaded by the spiral spring (80), which preload gives a biasing that is possible to counteract when manually pulling out the retractable coupling from the locking device (30) for connection to the vehicle.

7. Apparatus (10) according to any preceding claim, wherein the blocking mechanism (70) is a ratchet and pawl mechanism (70) of the locking device (30) comprising a ratchet (71) fixedly connected to the spool (60), a carrier pawl (72), a stationary pawl (73) and the control arrangement (20) in the form of a control lever (20), which control lever is rotatably attached to the ratchet and provided with the carrier pawl (72), and the stationary pawl (73) is pivotally attached to a stationary housing (31) of the locking device (30).

8. Apparatus (10) according to claim 7, wherein the carrier pawl (72) is pivotally attached to the control lever (20) and the control lever is provided with a protrusion (74) being adapted to disengage the stationary pawl (73) from the ratchet (71) for releasing the tension of the restraining of the vehicle (1).

9. Apparatus (10) according to claim 7, wherein the housing (31) of the locking device (30) is provided with a protrusion (75) being adapted to disengage the carrier pawl (72) from the ratchet (71) for releasing the tension of the restraining of the vehicle (1).

10. Apparatus (10) according to claims 8 and 9, wherein the disengagement of the stationary pawl (73) from the ratchet (71), and the disengagement of the carrier pawl (72) from the ratchet (71) are adapted to occur simultaneously for releasing the tension of the restraining of the vehicle (1).

11. Apparatus (10) according to claim 10, wherein the carrier pawl (72) is attached to the control lever (20) and the protrusion (74) of the control lever is provided on the control lever (20) such that the stationary pawl (73) is disengaged from the ratchet (71) by the protrusion (74) of the control lever simultaneously as the carrier pawl (72) is disengaged from the ratchet (71) by the protrusion (75) of the locking device for releasing the tension of the restraining of the vehicle (1).

12. System (100) for control of restraining a vehicle (1) at a loading dock (2), comprising the apparatus according to any of the claims 1 to 11, and at least one sensor (110) adapted to alarm or at least indicate when the vehicle (1) moves away from the locking device (30) and generates a force in the retractable coupling (40) exceeding an overload threshold value during and after restraining of the vehicle.

13. System (100) according to claim 12, comprising at least one sensor (120) adapted to alarm or at least indicate if the vehicle (1) moves towards the locking device (30) decreasing a force in the retractable coupling (40) below a slack threshold value or if the preloading unit (50) has a preload lower than a slack threshold value during and after restraining of the vehicle.

14. System (100) according to claim 12 or 13, comprising at least one sensor (130) adapted to alarm or at least indicate when the preloading unit (50) has reached a predetermined preload during restraining of the vehicle (1).

15. System (100) according to claim 12 or 13 or 14, comprising at least one sensor (140) adapted to alarm or at least indicate that the locking system (30) is disarmed and furled and ready for restraining of the vehicle (1).

## Patentansprüche

1. Vorrichtung (10) zum Zurückhalten eines Fahrzeugs (1) an einer Laderampe (2), die Folgendes umfasst:
- eine Kontrollanordnung (20), die mit einer Verriegelungsvorrichtung (30) wirkverbunden ist, die eine zurückziehbare Kupplung (40) umfasst, die dazu ausgebildet ist, zum Zurückhalten des Fahrzeugs lösbar mit dem Fahrzeug verbunden zu sein, und wobei die Kontrollanordnung (20) dazu ausgebildet ist, das Spannen und Lösen der Spannung des Zurückhaltens des Fahrzeugs (1) zu kontrollieren,
- eine Vorbelastungseinheit (50), die an einem Ende (51) an der Verriegelungsvorrichtung (30) befestigt ist und am anderen Ende (52) an der Laderampe (2), wobei die Vorbelastungseinheit dazu ausgebildet ist, das Zurückhalten des Fahrzeugs (1) durch eine Aufhängung (53), die beim Zurückhalten des Fahrzeugs zusammengedrückt wird, vorzubelasten, wobei
- die Verriegelungsvorrichtung (30) eine Spule (60) umfasst, auf die die zurückziehbare Kupplung (40) aufwickelbar ist; einen Blockierungsmechanismus (70), der mit der Kontrollanordnung (20) und der Spule (60) wirkverbunden ist;
**dadurch gekennzeichnet, dass** die Verriegelungsvorrichtung (30) eine Spiralfeder (80) umfasst, die die Spule (60) zum Vorbelasten und Zurückziehen der zurückziehbaren Kupplung (40) vorspannt, wobei die Spule (60) von der Spiralfeder (80) so vorbelastet wird, dass die zurückziehbare Kupplung (40) zurückgezogen und in ihrem zurückgezogenen Zustand gehalten wird, wenn sie nicht in Gebrauch ist.

2. Vorrichtung (10) nach Anspruch 1, wobei die Verriegelungsvorrichtung (30) von der Laderampe (2) gestützt wird, um horizontale Bewegungen der Verriegelungsvorrichtung in Reaktion auf Fahrzeugbewegungen zu ermöglichen.

3. Vorrichtung (10) nach Anspruch 1 oder 2, wobei die Verriegelungsvorrichtung (30) auf einer Halterung (90) angeordnet ist, die fest an der Laderampe (2) befestigt ist, wobei die Verriegelungsvorrichtung (30) gegen eine Gleitfläche (91) an der Halterung gleitbar gestützt ist.

4. Vorrichtung (10) nach Anspruch 1, 2 oder 3, wobei die Vorbelastungseinheit (50) auf einer Halterung (90) angeordnet ist, die fest an der Laderampe (2) befestigt ist, wobei die Vorbelastungseinheit (50) an ihrem anderen Ende (52) gelenkig an der Halterung befestigt ist.

5. Vorrichtung (10) nach einem der vorgenannten Ansprüche, wobei die Verriegelungsvorrichtung (30) und die Vorbelastungseinheit (50) auf einer gemeinsamen Halterung (90) angeordnet sind, wobei sie eine Einheit bilden.

6. Vorrichtung (10) nach einem der vorgenannten Ansprüche, wobei die Spule (60), auf die die zurückziehbare Kupplung (40) aufwickelbar ist, von der Spiralfeder (80) vorbelastet wird, wobei die Vorlast ein Vorspannen bewirkt, dem entgegengewirkt werden kann, wenn die zurückziehbare Kupplung zum Verbinden mit dem Fahrzeug manuell aus der Verriegelungsvorrichtung (30) gezogen wird.

7. Vorrichtung (10) nach einem der vorgenannten Ansprüche, wobei der Blockierungsmechanismus (70) ein Ratsche-Knarre-Mechanismus (70) der Verriegelungsvorrichtung (30) ist, der eine fest mit der Spule (60) verbundene Ratsche (71), eine Trägerknarre (72), eine stationäre Knarre (73) und die Kontrollanordnung (20) in Form eines Kontrollhebels (20) umfasst, wobei der Kontrollhebel drehbar an der Ratsche befestigt und mit der Trägerknarre (72) bereitgestellt ist und die stationäre Knarre (73) schwenkbar an einem stationären Gehäuse (31) der Verriegelungsvorrichtung (30) befestigt ist.

8. Vorrichtung (10) nach Anspruch 7, wobei die Trägerknarre (72) schwenkbar am Kontrollhebel (20) befestigt und der Kontrollhebel mit einem Vorsprung (74) bereitgestellt ist, der dazu ausgebildet ist, zum Lösen der Spannung des Zurückhaltens des Fahrzeugs (1) die stationäre Knarre (73) aus der Ratsche (71) auszuklinken.

9. Vorrichtung (10) nach Anspruch 7, wobei das Gehäuse (31) der Verriegelungsvorrichtung (30) mit einem Vorsprung (75) bereitgestellt ist, der dazu ausgebildet ist, zum Lösen der Spannung des Zurückhaltens des Fahrzeugs (1) die Trägerknarre (72) aus der Ratsche (71) auszuklinken.

10. Vorrichtung (10) nach den Ansprüchen 8 und 9, wobei das Ausklinken der stationären Knarre (73) aus der Ratsche (71) und das Ausklinken der Trägerknarre (72) aus der Ratsche (71) dazu angepasst sind, zum Lösen der Spannung des Zurückhaltens des Fahrzeugs (1) gleichzeitig zu erfolgen.

11. Vorrichtung (10) nach Anspruch 10, wobei die Trägerknarre (72) am Kontrollhebel (20) befestigt und der Vorsprung (74) des Kontrollhebels so am Kontrollhebel (20) bereitgestellt ist, dass die stationäre Knarre (73) zum Lösen der Spannung des Zurückhaltens des Fahrzeugs (1) gleichzeitig vom Vorsprung (74) des Kontrollhebels aus der Ratsche (71) ausgeklinkt wird, wenn die Trägerknarre (72) vom Vorsprung (75) der Verriegelungsvorrichtung aus der Ratsche (71) ausgeklinkt wird.

12. System (100) zur Kontrolle des Zurückhaltens eines Fahrzeugs (1) an einer Laderampe (2), das die Vorrichtung nach einem der Ansprüche 1 bis 11 umfasst sowie mindestens einen Sensor (110), der dazu ausgebildet ist, zu alarmieren oder zumindest darauf hinzuweisen, wenn sich das Fahrzeug (1) von der Verriegelungsvorrichtung (30) weg bewegt, und der in der zurückziehbaren Kupplung (40) eine Kraft erzeugt, die während oder nach dem Zurückhalten des Fahrzeugs einen Überlastschwellwert überschreitet.

13. System (100) nach Anspruch 12, das mindestens einen Sensor (120) umfasst, der dazu ausgebildet ist, zu alarmieren oder zumindest darauf hinzuweisen, wenn sich das Fahrzeug (1) zur Verriegelungsvorrichtung (30) hin bewegt, wobei eine Kraft in der zurückziehbaren Kupplung (40) unter einen Durchhangschwellwert verringert wird, oder wenn die Vorbelastungseinheit (50) während und nach dem Zurückhalten des Fahrzeugs eine Vorlast hat, die niedriger ist als der Durchhangschwellwert.

14. System (100) nach Anspruch 12 oder 13, das mindestens einen Sensor (130) umfasst, der dazu ausgebildet ist, zu alarmieren oder zumindest darauf hinzuweisen, wenn die Vorbelastungseinheit (50) während des Zurückhaltens des Fahrzeugs (1) eine vorbestimmte Vorlast erreicht hat.

15. System (100) nach Anspruch 12 oder 13 oder 14, das mindestens einen Sensor (140) umfasst, der dazu ausgebildet ist, zu alarmieren oder zumindest darauf hinzuweisen, dass das Verriegelungssystem (30) entschärft und aufgerollt und zum Zurückhalten des Fahrzeugs (1) bereit ist.

## Revendications

1. Appareil (10) pour retenir un véhicule (1) à un quai de chargement (2), comprenant
- un dispositif de commande (20) connecté de façon opérationnelle à un dispositif de verrouillage (30) comprenant un accouplement rétractable (40) conçu pour être connecté de façon libérable au véhicule pour retenir le véhicule, lequel dispositif de commande (20) est conçu pour commander la mise en tension et la libération de la tension de la retenue du véhicule (1),
- une unité de précharge (50) étant fixée à une extrémité (51) au dispositif de verrouillage (30) et fixée à l'autre extrémité (52) au quai de chargement (2), laquelle unité de précharge est conçue pour précharger la retenue du véhicule (1) au moyen d'une suspension (53) étant comprimée lorsque l'on retient le véhicule, dans lequel
- le dispositif de verrouillage (30) comprend un enrouleur (60) sur lequel l'accouplement rétractable (40) peut être enroulé ; un mécanisme de blocage (70) relié de façon opérationnelle au dispositif de commande (20) et à l'enrouleur (60) ;
**caractérisé en ce que** le dispositif de verrouillage (30) comprend un ressort hélicoïdal (80) sollicitant l'enrouleur (60) pour précharger et rétracter l'accouplement rétractable (40), dans lequel l'enrouleur (60) est préchargé par le ressort hélicoïdal (80), de telle sorte que l'accouplement rétractable (40) est rétracté et maintenu dans son état rétracté lorsqu'il n'est pas en cours d'utilisation.

2. Appareil (10) selon la revendication 1, dans lequel le dispositif de verrouillage (30) est soutenu par le quai de chargement (2) pour permettre des mouvements horizontaux du dispositif de verrouillage en réponse à des mouvements du véhicule.

3. Appareil (10) selon la revendication 1 ou 2, dans lequel le dispositif de verrouillage (30) est disposé sur un support (90) étant fermement fixé au quai de chargement (2), de telle manière que le dispositif de verrouillage (30) est soutenu de manière coulissante contre une surface de glissement (91) sur le support.

4. Appareil (10) selon la revendication 1, 2 ou 3, dans lequel l'unité de précharge (50) est disposée sur un support (90) étant fermement fixé au quai de chargement (2), de telle manière que l'unité de précharge (50) est fixée de façon articulée au niveau de son autre extrémité (52) au support.

5. Appareil (10) selon l'une quelconque des revendications précédentes, dans lequel le dispositif de verrouillage (30) et l'unité de précharge (50) sont disposés sur un support commun (90) formant une unité.

6. Appareil (10) selon l'une quelconque des revendications précédentes, dans lequel l'enrouleur (60), sur lequel l'accouplement rétractable (40) peut être enroulé, est préchargé par le ressort hélicoïdal (80), laquelle précharge donne une sollicitation qu'il est possible de contrecarrer lorsque l'on extrait manuellement l'accouplement rétractable du dispositif de verrouillage (30) pour une connexion au véhicule.

7. Appareil (10) selon l'une quelconque des revendications précédentes, dans lequel le mécanisme de blocage (70) est un mécanisme à rochet et à cliquet (70) du dispositif de verrouillage (30) comprenant un rochet (71) relié fixement à l'enrouleur (60), un cliquet de support (72), un cliquet fixe (73) et le dispositif de commande (20) sous la forme d'un levier de commande (20), lequel levier de commande est fixé de manière rotative au rochet et muni du cliquet de support (72) et le cliquet fixe (73) est fixé de façon pivotante à un logement fixe (31) du dispositif de verrouillage (30).

8. Appareil (10) selon la revendication 7, dans lequel le cliquet de support (72) est fixé de façon pivotante au levier de commande (20) et le levier de commande comporte une partie saillante (74) étant conçue pour désolidariser le cliquet fixe (73) du rochet (71) pour libérer la tension de la retenue du véhicule (1).

9. Appareil (10) selon la revendication 7, dans lequel le logement (31) du dispositif de verrouillage (30) comporte une partie saillante (75) étant conçue pour désolidariser le cliquet de support (72) du rochet (71) pour libérer la tension de la retenue du véhicule (1).

10. Appareil (10) selon les revendications 8 et 9, dans lequel la désolidarisation du cliquet fixe (73) du rochet (71) et la désolidarisation du cliquet de support (72) du rochet (71) sont conçues pour se produire simultanément pour libérer la tension de la retenue du véhicule (1).

11. Appareil (10) selon la revendication 10, dans lequel le cliquet de support (72) est fixé au levier de commande (20) et la partie saillante (74) du levier de commande est ménagée sur le levier de commande (20) de telle sorte que le cliquet fixe (73) est désolidarisé du rochet (71) par la partie saillante (74) du levier de commande en même temps que le cliquet de support (72) est désolidarisé du rochet (71) par la partie saillante (75) du dispositif de verrouillage pour libérer la tension de la retenue du véhicule (1).

12. Système (100) pour la commande de retenue d'un véhicule (1) à un quai de chargement (2), comprenant l'appareil selon l'une quelconque des revendications 1 à 11 et au moins un capteur (110) conçu pour alerter ou au moins indiquer lorsque le véhicule (1) s'éloigne du dispositif de verrouillage (30) et produit une force dans l'accouplement rétractable (40) dépassant une valeur seuil de surcharge pendant et après la retenue du véhicule.

13. Système (100) selon la revendication 12, comprenant au moins un capteur (120) conçu pour alerter ou au moins indiquer si le véhicule (1) se rapproche du dispositif de verrouillage (30) diminuant une force dans l'accouplement rétractable (40) en dessous d'une valeur seuil de mou ou si l'unité de précharge (50) présente une précharge inférieure à une valeur seuil de mou pendant et après la retenue du véhicule.

14. Système (100) selon la revendication 12 ou 13, comprenant au moins un capteur (130) conçu pour alerter ou au moins indiquer lorsque l'unité de précharge (50) a atteint une précharge prédéfinie pendant la retenue du véhicule (1).

15. Système (100) selon la revendication 12 ou 13 ou 14, comprenant au moins un capteur (140) conçu pour alerter ou au moins indiquer que le système de verrouillage (30) est désarmé et replié et est prêt pour retenir le véhicule (1).
